(19) Europäisches Patentamt / European Patent Office / Office européen des brevets

(11) **EP 2 752 285 A1**

(12) **EUROPEAN PATENT APPLICATION**
published in accordance with Art. 153(4) EPC

(43) Date of publication:
**09.07.2014 Bulletin 2014/28**

(51) Int Cl.:
***B29C 43/42*** (2006.01)   ***B29B 11/16*** (2006.01)
***B29C 33/44*** (2006.01)   ***C08J 5/04*** (2006.01)
***B29K 101/12*** (2006.01)   ***B29K 105/08*** (2006.01)

(21) Application number: **12828119.3**

(22) Date of filing: **22.08.2012**

(86) International application number:
**PCT/JP2012/071746**

(87) International publication number:
**WO 2013/031789 (07.03.2013 Gazette 2013/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.08.2011   JP 2011185965**

(71) Applicant: **TEIJIN LIMITED**
**Chuo-ku**
**Osaka-shi**
**Osaka 541-0054 (JP)**

(72) Inventors:
• **NAGAKURA, Yasunori**
  **Gotemba-shi**
  **Shizuoka 412-0048 (JP)**
• **ARAKAWA, Motoomi**
  **Gotemba-shi**
  **Shizuoka 412-0048 (JP)**

(74) Representative: **Hallybone, Huw George**
**Carpmaels & Ransford LLP**
**One Southampton Row**
**London WC1B 5HA (GB)**

(54) **PRODUCTION METHOD FOR COMPOSITE MOLDED BODY HAVING UNDERCUT SECTION**

(57) This production method for a composite shaped product having an undercut portion is able to readily manufacture a composite shaped product having a complicated shape having an undercut portion, by including: a step (i) of forming an impregnated precursor by heating and pressurizing a non-impregnated precursor including carbon fibers with an average fiber length of 1 to 100 mm and a thermoplastic resin; a step (ii) of heating the impregnated precursor at the melting point of the thermoplastic resin or more; a step (iii) of arranging the heated impregnated precursor into a mold having an undercut structure; a step (iv) of clamping the undercut structure after or simultaneously being operated and pressurizing the impregnated precursor; and a step (v) of unclamped the mold, re-operating the undercut structure and taking out the composite shaped material from the unclamped mold.

FIG.1

WHEN CYLINDER LOWERED          WHEN CYLINDER RAISED

EP 2 752 285 A1

**Description**

Technical Field

The present invention relates to a production method of a composite shaped product. Particularly, the present invention relates to a production method of a composite shaped product having an undercut portion, which includes a thermoplastic resin and carbon fibers and is able to be obtained by press molding suitable for mass production.

Background Art

A composite material using carbon fibers has been expected to be applied to a use for vehicles requiring lightening weight, by using the high specific strength and high specific rigidity thereof. Particularly, in the case of using a thermoplastic resin as a matrix, the composite material is promising from the viewpoint of productivity and recyclability.
For the products made from a fiber-reinforced composite material, there are many products having undercut portions in not only the use for vehicles but also products such as electronic cases. The undercut portion stated in the present invention means a section having a shape which is very difficult or unable to be taken out in an opening direction of the mold (for example, a concave portion formed at a side surface of the shaped product). Generally, in a resin product not including reinforcing fibers, the undercut portion is molded by injection molding (Patent Documents 1 and 2).
However, when a composite material including reinforcing fibers is molded by injection molding, fiber lengths of the reinforcing fibers are generally shortened by a shearing force of a screw. When the fiber lengths are shortened, a dynamic strength required for the product is not achieved. Further, there is a problem in that the fibers are easily aligned by flowing during molding to have a significant effect on physical properties.
Patent Document 3 discloses an RTM molding method of molding an FRP shaped product by injecting a resin from the outside a mold after arranging a reinforcing fiber base material in a cavity section and clamping the mold. The method is difficult to apply to molding requiring high pressure such as molding of a thermoplastic resin because in the method, molding is performed by pressurizing with a pressurizing medium, instead of a metallic mold, and thereby complicating the process.

Patent Document 1: Japanese Patent Application Laid-Open No.H 6-126783
Patent Document 2: Japanese Patent Application Laid-Open No. 2010-264682
Patent Document 3: Japanese Patent Application Laid-Open No. 2009-28939

Summary of Invention

Problems to be solved by Invention

A main objective of the present invention is to provide a novel production method of a composite shaped product having an undercut portion.
Another objective of the present invention is to provide a production method of a composite shaped product having an undercut portion and including carbon fibers and a thermoplastic resin.
Other objectives and advantages of the present invention will be apparent from the description below.
According to the present invention, an object and an advantage of the present invention are achieved by a method of producing a composite shaped product having an undercut portion, the method including

[1]

(i) heating and pressurizing a non-impregnated precursor including carbon fibers with an average fiber length in a range of 1 mm to 100 mm and a thermoplastic resin to prepare an impregnated precursor,
(ii) heating the impregnated precursor at a temperature not less than a melting temperature of the thermoplastic resin,
(iii) arranging the heated impregnated precursor within a mold having an undercut structure,
(iv) clamping the mold after or while the undercut structure is operated, and pressurizing the impregnated precursor by a pressurizer, and
(v) unclamping the mold and re-operating the undercut structure to take out the composite shaped product from the unclamped mold.

Further, the present invention also includes the following inventions.

[2] The method of producing the composite shaped product of [1], in which a part of the carbon fibers include a carbon fiber bundle in the non-impregnated precursor.

[3] The method of producing the composite shaped product of [1] and [2], in which the non-impregnated precursor includes a sheet having carbon fiber bundles (A) having single carbon fibers of a critical number of single fiber or more, the critical number of single fiber being defined by the following Equation (1), and a ratio of the carbon fiber bundles (A) to a total amount of the carbon fibers is 20 Vol% or more and 99 Vol% or less.

$$\text{Critical number of single fiber} = 600/D \ (1)$$

[In which, D is an average fiber diameter ($\mu$m) of the single carbon fibers.]

[4] The method of producing the composite shaped product of [3], in which an average fiber number (N) of the carbon fiber bundles (A) satisfies the following Equation (2).

$$0.7 \times 10^4/D^2 < N < 1 \times 10^5/D^2 \qquad (2)$$

[5] The method of producing the composite shaped product of [1] to [4], in which the non-impregnated precursor includes a sheet in which the carbon fibers are substantially randomly oriented in in-plane directions.

[6] The method of producing the composite shaped product of [1] to [5], in which a content ratio of the thermoplastic resin to the carbon fibers in the non-impregnated precursor ranges from 50 to 1,000 parts by volume to 100 parts by volume of the carbon fibers.

[7] The method of producing the composite shaped product of [1] to [6], in which a part of the carbon fibers include carbon fiber bundles in the impregnated precursor.

[8] The method of producing the composite shaped product of [1] and [7], in which the impregnated precursor includes a sheet having carbon fiber bundles (A) having single carbon fibers of a critical number of single fiber or more, the critical number of single fiber being defined by the following Equation (1), and a ratio of the carbon fiber bundles (A) to a total amount of the carbon fibers is 20 Vol% or more and 99 Vol% or less.

$$\text{Critical number of single fiber} = 600/D \ (1)$$

[In which, D is an average fiber diameter ($\mu$m) of the single carbon fibers.]

[9] The method of producing the composite shaped product of [1] to [8], in which the impregnated precursor includes a sheet in which the carbon fibers are substantially randomly oriented in in-plane directions.

[10] The method of producing the composite shaped product of [1] to [9], in which the undercut structure is operated independently from an operation of the pressurizer.

[11] The method of producing the composite shaped product of [1] to [10], in which the undercut structure is at least one kind selected from a group consisting of a slide core, an inclined core, a cam, and a setting core.

[12] A composite shaped product having an undercut portion, manufactured by the methods of [1] to [11].

[13] The composite shaped product having an undercut portion of [12], in which a ratio (E$\delta$) obtained by dividing a larger value by a smaller value of tensile modulus in an arbitrary in-plane direction and a direction perpendicular to the arbitrary in-plane direction ranges from 1.0 to 1.4.

[14] The composite shaped product having an undercut portion of [12] and [13], in which a ratio of a fiber length of the carbon fibers in the composite shaped product having the undercut portion ranges from 0.7 to 1.0 with respect to a fiber length of the carbon fibers in the impregnated precursor, set to be 1.0.

[15] Use of an impregnated precursor obtained by heating and pressurizing a non-impregnated precursor including carbon fibers having an average fiber length in a range of 1 mm to 100 mm and a thermoplastic resin to manufacture a composite shaped product having an undercut portion by using a mold having an undercut structure and pressurizing the mold.

The present inventors investigated a composite shaped product using carbon fibers having excellent lightweight and excellent mechanical property as a reinforcing fiber and a thermoplastic resin having excellent productivity and recyclability as a matrix resin. Particularly, the inventors paid attention to and investigated carbon fibers capable of providing the composite material to cope with complication or thin-walling of a product shape. As a result, the inventors found that a fiber length in a specific range and carbon fiber bundles are very important and completed the present invention.

In addition, according to the present invention, it is possible to prepare a composite shaped product having an undercut portion by heating an impregnated precursor including carbon fibers having an average fiber length in a range of 1 mm to 100 mm and a thermoplastic resin at a temperature not less than a melting temparature of the thermoplastic resin, and cold-pressing the heated impregnated precursor by using a mold having, for example, a slide core which is able to independently operate.

Brief Description of Drawings

    FIG. 1 illustrates a view of a representative mold structure using a slide core.
    FIG. 2 illustrates a part of a representative mold structure using an inclined core.
    FIG. 3 illustrates a part of a representative mold structure using a cam (dog leg cam).

Description of Reference Numerals

    1: Movable mold
    2: Fixed mold
    3: Slide core
    4: Ejector plate
    5: Ejector cylinder
    6: Angular pin
    7: Stopper plate
    8: Inclined core
    9: Slide plate
    10: Dog leg cam
    11: Undercut portion

Description of Embodiments

Hereinafter, embodiments of the present invention will be described.

Process (i)

[Non-impregnated precursor]

In process (i) of the present invention, a non-impregnated precursor including carbon fibers and a thermoplastic resin is used. In the non-impregnated precursor, certain carbon fibers are entirely uniformly dispersed in a matrix resin constituted by thermoplastic resin.

The carbon fibers may provide a composite shaped product having high specific strength and specific rigidity and high mechanical strength. Among the carbon fibers, a PAN-based or a pitch-based carbon fiber is preferred. An average fiber diameter of the carbon fibers preferably ranges from 3 $\mu$m to 12 $\mu$m, and more preferably from 5 $\mu$m to 9 $\mu$m. The average fiber diameter further more preferably ranges from 5 $\mu$m to 7 $\mu$m.

The carbon fibers used in the present invention may be obtained by cutting a carbon fiber strand having 1,000 to 50,000 carbon fiber bundles into a piece of carbon fiber strand with an average fiber length in a range of 1 mm to 100 mm. In terms of cost, it is preferred that as for the carbon fiber strand used for cutting, fiber strands having 20,000 or more carbon fiber bundles are used. In terms of handling during molding or design property, the cut carbon fiber has an average fiber length in a range of preferably more than 1 mm and less than 100 mm, more preferably 3 mm to 80 mm, and much more preferably 3 mm to 30 mm to be used.

Here, the average fiber length of the carbon fibers in the non-impregnated precursor is recorded by measuring lengths of randomly extracted 100 carbon fibers by 1 mm unit by using a loupe. The average fiber length may be calculated from all of the measured lengths (Li) of the carbon fibers by the following Equation.

$$\text{Average fiber length} = \Sigma Li/100$$

As described above, all or most of the cut carbon fibers constitute carbon fiber bundles, but some of the cut carbon fibers may exist in the form of single carbon fibers.

The carbon fibers of the present invention may have only one fiber length or a plurality of fiber lengths so long as the average fiber length is in the above range. Of course, the fiber lengths may have a distribution. The distribution may have 2 or more peaks.

The carbon fibers may be subject to surface treatment such as coupling agent treatment, sizing agent treatment, and adhering treatment of additives. Further, as for the carbon fibers, either one kind of carbon fiber may be used alone or two or more kinds of carbon fibers may be used in combination.

In the carbon fibers, for example, inorganic fibers such as glass fibers and organic fibers such as aramide fibers may be included at a ratio of 50 wt% or less based on the total amount of the carbon fibers.

The non-impregnated precursor of the present invention may be formed from the carbon fibers including a plurality of carbon fiber bundles. In addition, the non-impregnated precursor is a planar structure such as a mat or a sheet (hereinafter, simply referred to as a sheet). In the sheet, the carbon fibers may not be entirely aligned in one direction, for example, in a specific in-plane direction or a thickness direction. Particularly, the carbon fibers (preferably, the carbon fiber bundles) are disorderly and randomly oriented in in-plane directions. Since the carbon fibers are not aligned in a specific direction, a composite shaped product which has good isotropy in the in-plane directions and is uniform and excellent in rigidity may be obtained.

The non-impregnated precursor used in the present invention is a non-impregnated sheet in which the thermoplastic resin is not substantially impregnated into the sheet constituted by the carbon fibers. Here, the non-impregnated state is a solid state which has a good handling property so that the non-impregnated precursor can be arranged in a mold, and has flexibility to some extent. The non-impregnated precursor generally has a pore or a space therein. The thermoplastic resin constitutes the non-impregnated precursor, generally in a non-molten solid state, together with the carbon fibers.

In the non-impregnated precursor, the thermoplastic resin may exist in various forms. For example, in the case of a powder or fibrous form, the resin does not fully cover the carbon fibers, but are uniformly or non-uniformly dispersed or entangled around the carbon fibers. A part of the resin in the powder or fibrous form may be in contact with and heat-fused to the carbon fibers, or cover some of the carbon fibers. In the case where the thermoplastic resin is formed in a film or non-woven fabric, the resin may partially or fully cover the carbon fibers, and for example, the resin may be placed on an outermost layer of one side or outermost layers of both sides of the mat constituted by the carbon fibers.

The non-impregnated precursor suitable for the present invention is a substantially in-plane isotropic sheet which does not have anisotropy in the in-plane directions in physical properties, for example, such as strength or tensile modulus. That is, as described above, in view of the entire of the sheet, the carbon fibers may be randomly and disorderly placed in, particularly the in-plane directions. Accordingly, the carbon fibers are not substantially aligned in the in-plane directions.

In the present invention, the isotropy of the carbon fibers constituting the non-impregnated precursor is maintained even in the impregnated precursor to be described below and the finally obtained composite shaped product. Further, in the present invention, the carbon fibers are determined to be isotropic when a tensile test is performed based on an arbitrary in-plane direction of the impregnated precursor and the composite shaped product, and a perpendicular direction to the arbitrary direction in-plane direction, and a tensile moduli are measured, and the ratio ($E\delta$) obtained by dividing a larger value by a smaller value of the measured values does not exceed 2. When the $E\delta$ does not exceed 1.4, the carbon fibers are determined to have better isotropy.

The thermoplastic resin of the present invention is not particularly limited, but for example, may be polyolefin such as polypropylene, polyamide such as nylon, polycarbonate, aromatic polyester such as polyethylene terephthalate, polyethylene naphthalate, or polybutylene terephthalate, aliphatic polyester such as polylactic acid, polyacetal, polyvinyl chloride, polyphenylene sulfide, a styrene-based resin such as poly(styrene-acrylonitrile-butadiene)-based copolymer (ABS resin), poly(acrylonitrile-styrene)-based copolymer (AS resin), or high impact polystyrene (HIPS), an acrylic-based resin such as polymethyl methacrylate, and the like, or an alloy thereof. The thermoplastic resins may be used in combination of two or more kinds thereof.

Here, in the carbon fibers and the thermoplastic resin in the non-impregnated precursor, the content ratio of the thermoplastic resin may range from 50 to 1,000 parts by volume based on 100 parts by volume of the carbon fibers. In order to improve the moldability and the shaped product appearance, the ratio of the thermoplastic resin may be in a range of 100 to 500 parts by volume.

The non-impregnated precursor of the present invention is substantially constituted by the carbon fibers and the thermoplastic resin, but may also include, for example, a weatherproof stabilizer, a release agent, a resin colorant, or a mixture thereof within a range which does not impair an object of the present invention (for example, at a ratio of 20 Vol% or less, preferably 10 Vol% or less, more preferably 5 Vol% or less, and much more preferably 1 Vol% or less based on a total amount of the carbon fibers and the thermoplastic resin).

The non-impregnated precursor of the present invention is mainly constituted by the carbon fibers and the thermoplastic resin as described above. Preferably, some of the carbon fibers are in a state of carbon fiber bundle state. Accordingly, the non-impregnated precursor includes a plurality of carbon fiber bundles constituted by the carbon fibers.

That is, according to the present invention, in order to obtain a composite shaped product having a more excellent mechanical strength, the opening degree of the carbon fibers may be controlled, and carbon fiber bundles (A) having a specific number or more of fibers and carbon fibers (B) which are further opened may be included at a specific ratio preferably. That is, in the non-impregnated precursor, the ratio of the carbon fiber bundles (A) having single fibers of a critical number of single fiber or more, the critical number of single fiber being defined by the following Equation (1)

$$\text{Critical number of single fiber} = 600/D \qquad (1)$$

[In which, D is an average fiber diameter ($\mu$m) of the single carbon fibers.]

to the total amount of the carbon fibers may be 20 Vol% or more and 99 Vol% or less in order to obtain a composite shaped product having an excellent mechanical property. In this case, in the non-impregnated precursor, besides the carbon fiber bundles (A), single carbon fibers and/or carbon fiber bundles having single fibers of less than the critical number of single fiber (both are referred to as carbon fibers (B)) are present as more opened carbon fibers in a ratio of more than 1 Vol% and less than 80 Vol% based on the total amount of the carbon fibers. The more opened carbon fibers (B) have single fibers of less than the critical number of single fiber. In order to obtain the composite shaped product excellent in mechanical properties, the ratio of the carbon fiber bundles (A) is more preferably 30 Vol% or more and less than 90 Vol%, and much more preferably 30 Vol% or more and less than 80 Vol%.

Further, an average fiber number (N) in the carbon fiber bundles (A) having single carbon fibers of the critical number of single fiber or more may preferably satisfy the following Equation (2).

$$0.7 \times 10^4/D^2 < N < 1 \times 10^5/D^2 \qquad (2)$$

[in which, D is an average fiber diameter ($\mu$m) of the single carbon fibers.]

It is more preferred that Equation (2) satisfies the following Equation (2').

$$0.7 \times 10^4/D^2 < N < 6.0 \times 10^4/D^2 \qquad (2')$$

(in which, D is defined as described above.)

When the average fiber number (N) of the carbon fiber bundles (A) is $0.7 \times 10^4/D^2$ or less, it is difficult to obtain a high fiber volume fraction (Vf). Further, when the average fiber number (N) of the carbon fiber bundles (A) is $6.0 \times 10^4/D^2$ or more, particularly, $1 \times 10^5$ or more, a thick portion is locally generated in the non-impregnated precursor or the composite shaped product which is the final product, easily generating voids.

[Process of Preparing Non-impregnated Precursor]

A production method of the non-impregnated precursor used in the present invention is not particularly limited, but for example, may include a process including the following steps (a) to (d).

(a) cutting carbon fibers by using a cutter,
(b) continuously introducing the cut carbon fibers into a tube, and opening the fibers to obtain carbon fibers including carbon fiber bundles,
(c) spreading the opened carbon fibers and at the same time, suctioning the opened carbon fibers together with a thermoplastic resin in a fibrous or powder form, and spraying the opened carbon fibers and the thermoplastic resin on a permeable sheet provided below an opening apparatus (referred to as a random mat forming process), and
(d) fixing the carbon fibers by suctioning the sprayed carbon fibers and the thermoplastic resin from a lower portion of the permeable sheet with air.

The opening degree of the carbon fibers, appropriately, a content ratio of the carbon fiber bundles (A) in the Equation (2), and the average fiber number (N) in the carbon fiber bundles (A) may be controlled by the processes.

The processes (a) to (d) will be described in slightly detail.

Process (a) is a process of cutting the carbon fiber, and carbon fiber strands which have not been slit, or slit carbon fiber strands having a narrow width are cut into an average fiber length of 1 mm to 100 mm. As an apparatus used for cutting the carbon fibers into an average fiber length of 1 mm to 100 mm, a rotary cutter is preferable. Further, a rotary cutter provided with a spiral knife having a specific angle is preferable.

Further, before the process (a), the following process of supplying the carbon fiber strands may be performed.

For example, from a plurality of carbon fiber-wound yarn bodies disposed on a creel section, respective yarns of carbon fibers are drawn, and are supplied as carbon fiber strands that are constituted by yarns alone or a plurality of single fibers. In this case, the strand width is preferably in a range of 10 mm to 50 mm (particularly, 20 mm to 30 mm). When the width of strands of carbon fibers to be supplied is small, if necessary, the strands may be widened up to a specific width in the strand supplying process to be supplied as thin wide-width strands. The widening operation may be performed by bringing the strands in contact with a roller or a bar for widening. Further, subsequently to this process, a so-called strand slit process may be performed in which the carbon fiber strands are continuously slit in parallel to a strand length direction (that is, along a fiber axial direction) to obtain a plurality of narrow width strands having a strand width ranging from 0.05 mm to 5 mm, preferably from 0.1 mm to 1.0 mm.

Process (b) is a carbon fiber opening process. The strand pieces are opened to be split into fiber bundles having a desired size (the number of bundled filaments). For example, the opening process may include an opening method by using gas or an opening method by using a slit. In detail, in the opening method by using gas, the strand pieces are introduced into a path, and the gas such as air is blown to the strand pieces passing through the path such that the strand pieces are separated into a desired bundle size and dispersed in the gas. The opening degree may be properly controlled by setting high pressure of the gas to be blown. In the opening method by using the slit, the opening degree may be properly controlled by adjusting the strand width.

In the carbon fiber opening process, not all fibers constituting the strand pieces are opened to be apart from each other and completely separated up to the form of single fibers. Some fibers are opened up to the form of single fibers or near the form of single fibers, but many fibers are required to be adjusted such that they become fiber bundles in which a specific number or more of single fibers are bundled. That is, the opening degree may preferably satisfy the ratio of the carbon fiber bundles (A) having single fibers of the critical number of single fiber or more, being defined by the Equation (1) to the carbon fibers (B) having single fibers of less than the critical number of single fiber, more preferably satisfy a specific the average fiber number (N) of the carbon fiber bundles (A).

Process (c) is a random mat forming process. In this process, first, the cut and opened carbon fibers are dispersed in air. Simultaneously, the thermoplastic resin in the form of powder or single fibers (hereinafter, they are generically referred to as "thermoplastic resin particles and the like") is supplied, and the carbon fibers together with the thermoplastic resin particles and the like are sprayed on a permeable support body provided below an opening apparatus. By this, the carbon fibers and the thermoplastic resin particles and the like are mixed on the support body, and deposited and fixed to have a specific thickness to form a random mat.

It is preferred that the thermoplastic resin particles and the like are supplied through a separate path from the gas-opened carbon fibers, and the carbon fibers and the thermoplastic resin particles and the like are simultaneously sprayed on the permeable support body. The carbon fibers and the thermoplastic resin particles and the like are deposited on the permeable support body in a mat shape, and fixed as it is in a state where both are substantially uniformly mixed with each other.

In this process, the carbon fibers and the thermoplastic resin particles and the like may be sprayed to be randomly oriented in in-plane directions. In order to spray the opened carbon fibers to be two-dimensionally oriented, a tapered tube such as a cone which is expanded downward may be used.

Process (d) includes fixing the carbon fibers and the thermoplastic resin. The fixing process is a process of fixing the deposited carbon fibers and the thermoplastic resin particles and the like. For example, the fixing process may include a method of fixing the carbon fibers by suctioning air from a lower portion of the permeable support body. The thermoplastic resin which is sprayed simultaneously with the carbon fibers may be fixed by air suction in the case of a fibrous form, and fixed along with the carbon fibers even in the case of a particulate form.

As such, the mat which is two-dimensionally randomly oriented may be obtained by suctioning air from a lower portion of the deposited surface. In the random mat obtained above, the thermoplastic resin particles and the like uniformly exist at a gap between the carbon fibers constituting the random mat or around the carbon fibers, and as a result, in a process of the production method of the impregnated precursor to be described below, a moving distance of the resin is short, and the resin may be impregnated in a relatively short time.

In more detail, as illustrated in Manufacturing Example 1 to be described below, first, solids such as single fibers or powder constituted by the thermoplastic resin are added to the prepared carbon fibers to be uniformly mixed with each other. Subsequently, the mixture is sprayed on a table which is movable in an XY direction by performing suction with a blower from a lower portion of the table. By this method, a mat-shaped non-impregnated precursor may be obtained. Further, in another method, a sheet substantially made of only the carbon fibers is formed in advance, and a structure such as a film or a non-woven fabric made of the thermoplastic resin may be arranged on at least one side of the sheet. In this case, if necessary, the sheet is pressurized and compressed, and finally, the sheet-shaped non-impregnated precursor may be obtained.

In the non-impregnated precursor obtained above, the thermoplastic resin is substantially uniformly dispersed in the sheet made of the carbon fibers, as described above. In addition, in in-plane direction of the sheet, the carbon fibers are not aligned in a specific direction, but oriented to be dispersed in random directions. Preferably, a plurality of carbon fiber bundles constituted by the carbon fibers are dispersed in various directions on the sheet. As a result, the carbon fibers have entirely isotropy in in-plane directions of the sheet. More preferably, the carbon fiber bundles (A) having single fibers of the critical number of single fiber or more, the critical number of single fiber being defined represented by the Equation (1), exist in a ratio of 20 Vol% or more and 99 Vol% or less based on the total amount of the carbon fibers, and the carbon fibers (B) which includes single carbon fibers and fiber bundles having single fibers of less than the critical number of single fiber are present in a ratio of 1 Vol% or more and 80 Vol% or less based on the total amount of the carbon fibers.

[Impregnated Precursor and Production Method of Impregnated Precursor]

The impregnated precursor in the present invention may be prepared by heating and pressurizing the non-impregnated precursor.
The production method of the impregnated precursor is not particularly limited. For example, first, in the case where the thermoplastic resin is crystalline, the non-impregnated precursor is heated and pressurized at a temperature not less than a melting point, or in the case where the thermoplastic resin is amorphous, the non-impregnated precursor is heated and pressurized at a temperature not less than a glass transition temperature. As a heating method, for example, oil, an electric heater, induction heating, steam, and the like may be used, and a combination thereof may be used. The pressurizing method may employ, for example, pressurizing by a press machine, pressurizing by a steel belt, pressurizing by a roller, and the like, but in order to obtain a stable impregnated precursor, the pressurizing by the press machine may be used. The heating and the pressurizing may be continuously performed, or simultaneously performed.
After heating and pressurizing, the temperature of the precursor is cooled up to a temperature not greater than a solidification temperature of the thermoplastic resin. In this case, the pressure may be applied or not, but in order to uniformly obtain the impregnated precursor, preferably the pressure may be applied even during cooling.
The impregnated precursor obtained as above has an excellent handling property at room temperature to maintain a sheet shape.
In the impregnated precursor of the present invention, isotropy of the carbon fibers constituting the non-impregnated precursor is maintained. That is, the impregnated precursor is a sheet which does not have anisotropy in physical properties, such as for example, strength or modulus in in-plane directions when entirely viewed, but has substantially in-plane isotropy. That is, the impregnated precursor includes the carbon fibers (preferably, carbon fiber bundles), and the carbon fibers (preferably, carbon fiber bundles) are randomly oriented in disorder, particularly, in the in-plane directions.
Further, the impregnated precursor in the present invention is substantially maintained in the state of the non-impregnated precursor, in addition to isotropy. That is, the average fiber length of the carbon fibers, the average fiber diameter, the content of the carbon fibers and the thermoplastic resin, the critical number of single fiber, the content of the carbon fiber bundles (A) having single fibers of critical number of single fiber or more, and the average fiber number (N) are the same as those of the non-impregnated precursor.

Processes (ii) to (v)

In detail, the composite shaped product of the present invention may be preferably obtained by sequentially performing a method including cold press processes (ii) to (v) below. [Process of Preparing the Non-impregnated Precursor], [Process of Preparing the Impregnated Precursor], and processes (ii) to (v) below may be continuously performed, or separately performed.

Process (ii)

The impregnated precursor obtained through process (i) is heated up to a temperature not less than a melting temperature of the thermoplastic resin. The melting temperature or more means a melting point or more in the case where the thermoplastic resin is crystalline, and a glass transition temperature or more in the case of an amorphous resin. As the heating method, for example, an infrared heater, a hot wind circulation heater and induction heating may be used. It is preferred to use the infrared heater capable of performing uniform heating at a rapid heating speed.

Process (iii)

The impregnated precursor heated by process (ii) is arranged and provided inside a mold capable of forming an undercut portion. In this case, a temperature of the mold is not particularly limited as long as the temperature is not greater than a solidification temperature of the thermoplastic resin, but in order to stabilize the molding process and prevent the temperature of the impregnated precursor from being decreased, the temperature may be preferably controlled. The temperature may be maintained constantly or controlled to be increased and decreased. A temperature of the mold may be generally in a range of 50°C to 160°C, and preferably 80°C to 130°C.

The mold which may be used in the present invention is a structure having a mechanism (referred to as an undercut structure) which operates to form the undercut portion of the composite shaped product. In the present invention, the undercut structure needs to operate independently from the pressurizer or through optional control. The independent operation is preferred in that an operation timing may be minutely adjusted and generation of a burr may be suppressed. A medium or power source for operation is not particularly limited, but a hydraulic cylinder, an air cylinder, a spring, a mold opening/shutting force, a gear, or the like may be used. In order to stand flowing pressure of the impregnated precursor, it is preferred to use the hydraulic cylinder, the mold opening/shutting force, or the gear.

Further, as the undercut structure in the present invention, for example, some types of cores such as a slide core, an inclined core, a cam, a setting core, and the like may be employed, but other types may be used. Further, in the same mold, the types of cores may be used either alone or in combination thereof. For example, a mold having a structure described in chapter 4, 4.8 of "understandable design of plastic injection molding mold" (Fukushima Yuichi Author, issued on November 18, 2002, Nikkan Kogyo Shimbun, Ltd.) may be used.

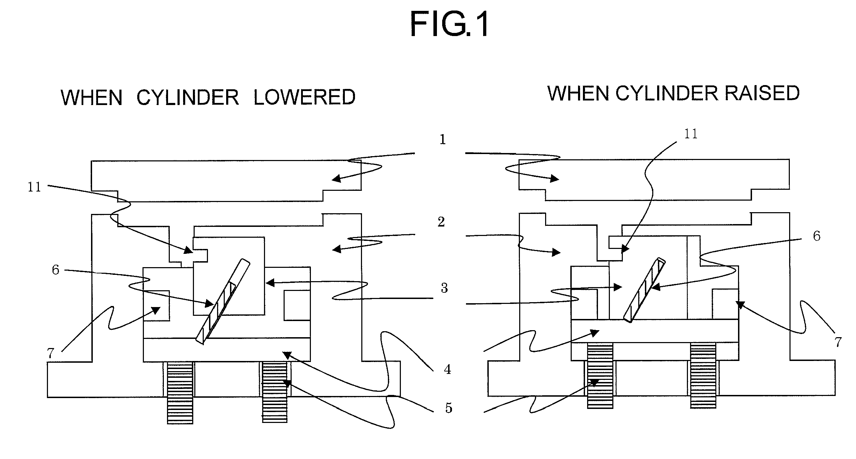

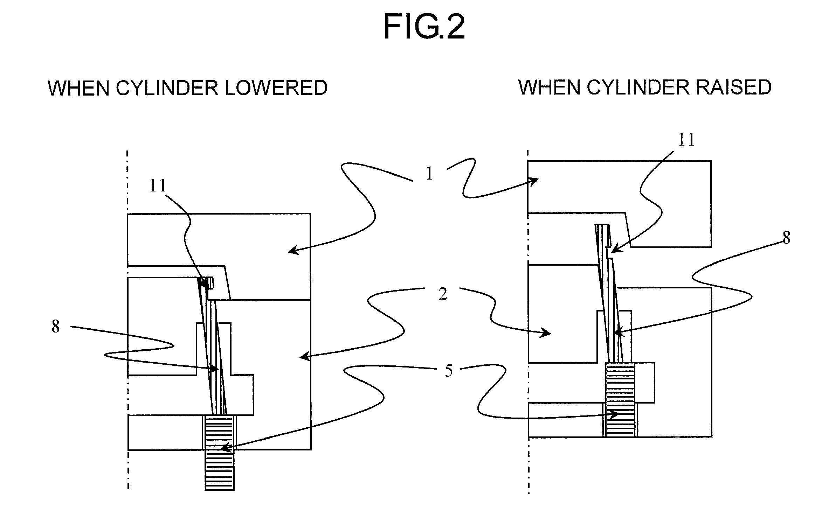

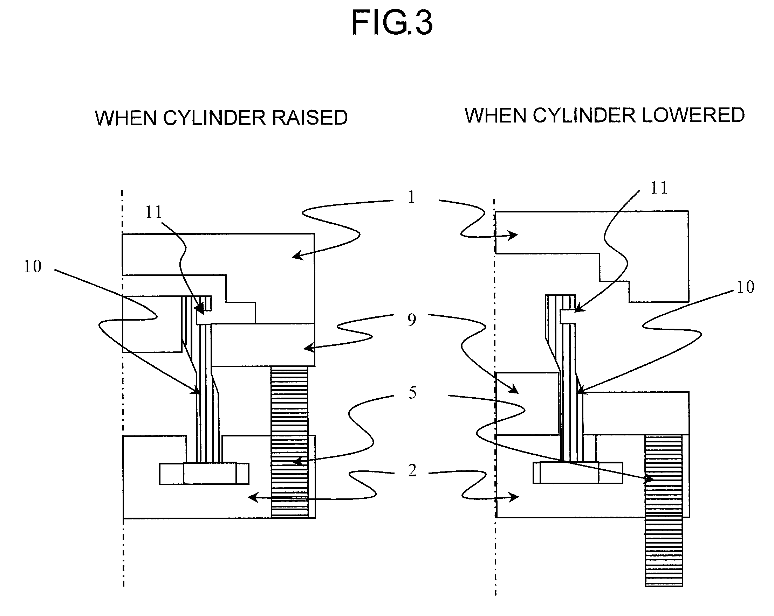

A representative structure of the mold in the present invention is illustrated in FIGs. 1 to 3. FIG. 1 is a mold using a slide core, which is used in Examples. FIG. 2 is a part (an example) of a mold using an inclined core, and FIG. 3 is a part (an example) of a mold using a cam (dog leg cam). By using the mold having the mechanism, as described below, the composite shaped product having the undercut may be easily taken out by operating and re-operating the mechanism.

Process (iv)

For example, as illustrated in FIG. 1, the slide core operates by pushing up a cylinder provided below the mold, and subsequently or simultaneously, clamping of the mold is performed. After the clamping is completed, so that sufficient solidification is made by heat exchanging of the impregnated precursor arranged inside the mold, generally, the mold is pressurized at specific pressure by a pressurizer and maintained for a specific time, for example, several seconds to several minutes. The temperature of the mold may be not greater than a solidification temperature of the thermoplastic resin as described in process (iii), generally in a range of 50°C to 160°C. The pressure is in a range of 0.5 MPa to 30 MPa, and preferably in a range of 5 MPa to 20 MPa. The time is, for example, in a range of 1 second to 100 seconds. The impregnated precursor flows within the mold to be formed in a mold shape. Further, as such, the slide core operates before clamping the mold to prevent the carbon fibers or the thermoplastic resin from being leaked outside the mold.

Process (v)

Subsequently, if necessary, the mold is cooled, and then unclamped, and the slide core operates again. The slide core moves by the operation such that the composite shaped product is taken out from the inside of the mold.

According to the present invention, it is possible to easily prepare the shaped product having a relatively complicated shape. Further, the shaped product having a small thickness may be easily molded to obtain the composite shaped product in, preferably, a thickness range of 1.0 mm to 3.0 mm.

[Composite Shaped product]

The composite shaped product in the present invention is obtained by the press molding as described above, and has the undercut portion. Here, the undercut has a shape which is very difficult to be taken out in an opening direction of a mold, or cannot be taken out. The mold used in the present invention has an undercut structure. Accordingly, an attachment surface of a component constituted by the obtained composite shaped product may be hided at a point which is not visible, or a burr or an angular end may be hided, and as a result, the secondary processing is not required. Further, since the fiber length of the carbon fibers in the composite shaped product ranges from 0.7 to 1.0 times the fiber length (1 as a criteria) of the impregnated precursor, the fiber lengths of the composite shaped product and the impregnated precursor are the same as each other, and the dynamic strength of the composite shaped product is hardly deteriorated as compared to the impregnated precursor. Further, unlike the RTM molding or injection molding by injecting the resin from the outside of the mold, the shaped product may be obtained by press molding. As a result, there is no anisotropy caused by flowing of the resin, but substantially and mechanically, isotropy is excellent.

Effects of Invention

According to the present invention, by press-molding a material including carbon fiber bundles having a specific length, the complicated composite shaped product having the undercut portion may be easily manufactured. Unlike RTM molding or injection molding, an apparatus for injection from the outside of the mold is unnecessary, and equipment is simple. Further, since the damage on the fibers due to shearing is small, the carbon fiber lengths may be maintained at almost the same level as those at the time of injection, and as a result, the shaped product having desired mechanical strength is obtained. Furthermore, since the carbon fibers are used as reinforcing fibers, a composite shaped product having a lightweight and an excellent mechanical property may be obtained. Further, since as the matrix resin, the thermoplastic resin is used, productivity and recyclability are excellent as compared to a thermosetting resin.

Examples

Examples are illustrated below, but the present invention is not limited thereto.

1. Carbon fiber

PAN-based carbon fibers used in the examples are Tenax STS40-24KS (a fiber diameter 7 $\mu$m, a fiber width of 10 mm) manufactured by Toho Tenax Co., Ltd.: .

2. Matrix Resin

As a matrix resin, a thermoplastic resin below was used.

1) Polyamide 66 (PA66) fiber [fiber made of polyamide 66 manufactured by Asahi Kasei Fibers Corporation: T5 nylon (fineness 1400 dtex), melting point 260°C, thermal decomposition temperature of about 330°C]
2) Polycarbonate resin (polycarbonate manufactured by Teijin Kasei Co., Ltd: Pan Light L-1225L, glass transition temperature ranging from 145°C to 150°C, thermal decomposition temperature of about 350°C)
3) Polypropylene resin (polypropylene manufactured by Prime Polymer Co., Ltd: Prime Polypropylene J108M, melting point of 170°C, thermal decomposition temperature of about 280°C)
4) Polybutylene terephthalate (PBT) resin (manufactured by Poly Plastics Co., Ltd: Dura Nex 500 FP, melting point of 220°C, thermal decomposition temperature of about 330°C)
5) Polyamide 6 (PA6) resin (manufactured by UNITIKA, A1030, melting point of 220°C, thermal decomposition temperature of about 300°C)

3. Various analysis methods

1) Analysis of carbon fiber bundles in non-impregnated precursor

A precursor is cut into about 100 mm × 100 mm.
From the cut mat, all fiber bundles were extracted by using tweezers, and the bundle number (I) of carbon fiber bundles (A), and the length (Li) and the weight (Wi) of the fiber bundles were measured and recorded. Some fiber bundles which were too small to be taken out by the tweezers were lastly weighed in a mass (Wk). For the measurement of the weight, a balance capable of measuring up to 1/100 mg was used.
From the fiber diameter (D) of the carbon fibers used in the precursor, the critical number of single fiber was calculated, and the carbon fibers were divided into carbon fiber bundles (A) having single fibers of the critical number of single fiber or more and the others. Further, in the case where two or more kinds of carbon fibers were used, measurement and evaluation were performed for each kind of fibers.
A method of calculating an average fiber number (N) of the carbon fiber bundles (A) is as follows.
The fiber number (Ni) of each carbon fiber bundle was calculated from the fineness (F) of the used carbon fibers by the following Equation. Here, the fineness (F) is represented by weight per length of a filament constituting the carbon fiber bundle.

$$\mathrm{Ni} = \mathrm{Wi}/(\mathrm{Li} \times \mathrm{F})$$

The average fiber number (N) is calculated from the bundle number (I) of the carbon fiber bundles (A) by the

following Equation.

$$N = \Sigma Ni/I$$

A ratio (VR) of the carbon fiber bundles (A) based on the total amount of fibers in the mat is calculated by the following Equation by using the density (ρ) of the carbon fibers.

$$VR = \Sigma(Wi/\rho) \times 100/((Wk + Wi)/\rho)$$

2) Method of measuring fiber length

Lengths of 100 carbon fibers which are randomly extracted from the precursor or the shaped product were measured and recorded up to a 1 mm unit by using a caliper and a loupe, and from all of the measured lengths (Li) of the carbon fibers, an average fiber length (La) was calculated by the following Equation. In order to take out only the fibers from the precursor or the shaped product, the carbon fibers were extracted after removing the resin in a furnace at 500°C for about 1 hour.

$$La = \Sigma Li/100$$

3) Analysis of fiber orientation in precursor

In a method of measuring isotropy of the fibers, a tensile test was performed in an arbitrary direction of the impregnated precursor and its perpendicular direction, and a ratio (Eδ) obtained by dividing the larger value by the smaller one of the measured values of tensile modulus was calculated. As the ratio of modulus is close to 1, isotropy is excellent.

4) Tensile test of composite shaped product

The tensile test was performed under a condition based on JISK-7164 by using a universal testing apparatus manufactured by Instron co., Ltd.

Manufacturing example 1

Carbon fibers were cut into a length of 15 mm by using a rotary cutter. Subsequently, the cut carbon fibers were introduced into a tapered tube, and fiber bundles including the cut carbon fibers were partially opened by spraying compressed air inside the tube. While the fiber opening was performed, simultaneously, PA 66 fibers dry-cut into 2 mm were mixed in the tapered tube to have a ratio of 300 parts by volume based on 100 parts by volume of the amount of the supplied carbon fibers in the final impregnated precursor. Subsequently, spraying was performed on a table movable in an XY direction which was provided below an outlet of the tapered tube while suction was performed with a blower from a lower portion of the table. By spraying, the carbon fibers and polyamide were mixed to obtain a mat-shaped non-impregnated precursor having a thickness of 1.2 mm, in which the carbon fibers were randomly oriented in the in-plane directions. The results of the content ratio of the carbon fiber bundles (A) and the carbon fibers (B), the critical number of single fiber (D), the average fiber number (N) of the carbon fiber bundles (A), and the modulus ratio are shown in Table 1.
The obtained non-impregnated precursors were layered with eight layers, and set in a planar mold heated at 290°C, and then clamping the mold. Next, pressure was increased up to 2.0 MPa for 10 seconds, and maintained for 40 seconds, and then the mold was cooled up to 80°C with cooling water and opened to obtain the impregnated precursor having a thickness of 3 mm in which PA 66 was impregnated into the carbon fibers. Further, as a result of ultrasonic inspection of the impregnated precursor, the impregnation was good. From the result of performing the tensile test, Eδ was 1.02.

Manufacturing example 2

Carbon fibers were cut into a length of 20 mm and introduced into the tapered tube. Subsequently, fiber bundles including the cut carbon fibers were partially opened by spraying compressed air inside the tube. While the fiber opening was performed, simultaneously, a polycarbonate resin which was freeze-pulverized and distributed with 20 mesh and 100 mesh, as the matrix resin, was mixed to have a ratio of 300 parts by volume based on 100 parts by volume of the amount of the supplied carbon fibers in the final impregnated precursor. Spraying was performed on a table movable in an XY direction which was provided below an outlet of the tapered tube while suction was performed with a blower from a lower portion of the table. By spraying, the carbon fibers and the polycarbonate resin were mixed to obtain a non-impregnated precursor in which the carbon fibers were randomly oriented in the in-plane directions. The results are shown in Table 1.

The obtained non-impregnated precursors were layered with eight layers, and set in a planar mold heated at 300°C, and then clamping the mold. Next, pressure was increased up to 2.5 MPa for 10 seconds, and maintained for 40 seconds, and then the mold was cooled up to 80°C with cooling water. After cooling, the mold was opened to obtain an impregnated precursor having a thickness of 3 mm in which the polycarbonate resin was impregnated in the carbon fibers. Further, as a result of ultrasonic inspection of the impregnated precursor, the impregnation was good. From the result of performing the tensile test, $E\delta$ was 1.03.

Manufacturing example 3

Carbon fibers were cut into a length of 15 mm by using a rotary cutter, and introduced into the tapered tube. Subsequently, fiber bundles including the cut carbon fibers were partially opened by spraying compressed air inside the tube. While the fiber opening was performed, simultaneously, a freeze-pulverized polypropylene resin was mixed to have a ratio of 300 parts by volume based on 100 parts by volume of the amount of the supplied carbon fibers in the final impregnated precursor. Spraying was performed on a table movable in an XY direction which was provided below an outlet of the tapered tube while suction was performed with a blower from a lower portion of the table, and the carbon fibers and the polypropylene resin were mixed to obtain a non-impregnated precursor in which the carbon fibers were randomly oriented in the in-plane directions. The results are shown in Table 1.

The obtained non-impregnated precursors were layered with five layers, and set in a planar mold heated at 230°C, and then clamping the mold. Next, pressure was increased up to 2.0 MPa for 10 seconds, and maintained for 40 seconds, and then the mold was cooled up to 80°C with cooling water and opened to obtain the impregnated precursor having a thickness of 2 mm in which the polypropylene resin was impregnated in the carbon fibers. Further, as a result of ultrasonic inspection of the impregnated precursor, the impregnation was good. From the result of performing the tensile test, $E\delta$ was 1.02.

Manufacturing example 4

Carbon fibers were cut into a length of 20 mm and introduced into the tapered tube. Subsequently, fiber bundles including the cut carbon fibers were partially opened by spraying compressed air inside the tube. While the fiber opening was performed, simultaneously, a PBT resin having an average particle diameter of 1.0 mm was mixed to have a ratio of 300 parts by volume based on 100 parts by volume of the amount of the supplied carbon fibers in the final impregnated precursor. Spraying was performed on a table movable in an XY direction which was provided below an outlet of the tapered tube while suction was performed with a blower from a lower portion of the table. By spraying, the carbon fibers and the PBT resin were mixed to obtain a non-impregnated precursor in which the carbon fibers were randomly oriented in the in-plane directions. The results are shown in Table 1.

The obtained non-impregnated precursors were layered with six layers, and set in a planar mold heated at 260°C, and then clamping the mold. Next, pressure was increased up to 2.5 MPa for 10 seconds, and maintained for 40 seconds, and then the mold was cooled up to 80°C with cooling water. After cooling, the mold was opened to obtain an impregnated precursor having a thickness of 2.4 mm in which the PBT resin was impregnated in the carbon fibers. Further, in the impregnated precursor, as a result of ultrasonic inspection, the impregnation was good. From the result of performing the tensile test, $E\delta$ was 1.05.

Manufacturing example 5

Carbon fibers were cut into a length of 2 mm by using a rotary cutter, and introduced into the tapered tube. Subsequently, fiber bundles including the cut carbon fibers were partially opened by spraying compressed air inside the tube. While the fiber opening is performed, simultaneously, PA 66 fibers dry-cut into 2 mm were mixed in the tapered tube to have a ratio of 300 parts by volume based on 100 parts by volume of the amount of the supplied carbon fibers in the final impregnated precursor. Spraying was performed on a table movable in an XY direction which was provided below an outlet of the tapered tube while suction was performed with a blower from a lower portion of the table, and the carbon fibers and the PA 66 fibers were mixed to obtain a non-impregnated precursor in which the carbon fibers were oriented in the in-plane directions. The results are shown in Table 1.

The obtained non-impregnated precursors were layered with eight layers, and set in a planar mold heated at 290°C, and then clamping the mold. Next, pressure was increased up to 2.0 MPa for 10 seconds, and maintained for 40 seconds, and then the mold was cooled up to 80°C with cooling water and opened to obtain the impregnated precursor having a thickness of 3 mm in which the thermoplastic resin was impregnated in the carbon fibers. Further, as a result of ultrasonic inspection of the impregnated precursor, the impregnation was good. From the result of performing the tensile test, E$\delta$ was 1.02.

Manufacturing example 6

Carbon fibers was widened into a width of 20 mm and cut into a fiber length of 20 mm. The cut carbon fibers were supplied to the tapered tube. Next, air was sprayed on the carbon fibers inside the tapered tube and thus the fiber bundles were partially opened. While the fiber opening was performed, spraying was performed on a table provided below an outlet of the tapered tube to prepare a mat having a thickness of 4 mm. Next, a PA6 resin was molten by using an extruder and was supplied to the entire surface of the obtained mat from a T-die. In this case, a portion on the mat surface to which the resin was supplied was heated by an infrared heater to prevent the resin from being cold-solidified. The apparatus was operated so that based on 100 parts by volume of the amount of the supplied carbon fibers, the PA6 resin was supplied in a ratio of 300 parts by volume to prepare an impregnated precursor having a thickness of 3 mm made of the carbon fibers and the PA6. The results are shown in Table 1. From the result of performing the tensile test, E$\delta$ was 1.04.

Table 1

| Manufacturing examples | Carbon fibers | Average fiber length | Critical number of single fiber | Ratio of carbon fiber bundles A[1] | Ratio of carbon fibers B[2] | Average fiber number N of carbon fiber bundles A | Modulus ratio E$\delta$ |
|---|---|---|---|---|---|---|---|
| 1 | STS40-24KS | 15 mm | 86 | 86% | 14% | 900 | 1.03 |
| 2 | STS40-24KS | 20 mm | 86 | 35% | 65% | 240 | 1.02 |
| 3 | STS40-24KS | 15 mm | 86 | 86% | 14% | 900 | 1.02 |
| 4 | STS40-24KS | 20 mm | 86 | 60% | 40% | 300 | 1.05 |
| 5 | STS40-24KS | 2 mm | 86 | 86% | 14% | 900 | 1.02 |
| 6 | STS40-24KS | 20 mm | 86 | 60% | 40% | 800 | 1.04 |

Ratio of carbon fiber bundles A[1]: Volume ratio of carbon fiber bundles having single fibers of the critical number of single fiber or more based on the total amount of fibers in a mat

Ratio of carbon fibers B[2]: Volume ratio of carbon fibers which include both carbon fiber bundles $B_1$ having single fibers of less than the critical number of single fiber, and single carbon fibers $B_2$, based on the total amount of fibers in a mat

Example 1

The impregnated precursor obtained in Manufacturing example 1 was heated up to 290°C by using an infrared heating furnace. Next, the impregnated precursor was conveyed into the mold illustrated in FIG. 1, and the slide core was moved by a hydraulic cylinder. After moving, press was performed for 30 seconds at pressure of 10 MPa. The mold was kept the temperature of 120°C by a temperature controller. After unclamping, a molded product was demolded by moving the slide core to obtain a composite shaped product having an undercut portion. The undercut portion was cut out of the obtained composite shaped product to measure a fiber length and tensile modulus. It was confirmed that the average fiber length was 14.7 mm (a fiber length ratio with respect to the impregnated precursor was 0.98) and there was no deterioration of tensile strength of the undercut portion.

Example 2

The impregnated precursor obtained in Manufacturing example 2 was heated up to 300°C by using an infrared heating furnace, and next, the impregnated precursor was conveyed into the mold illustrated in FIG. 1, and the slide core was moved by a hydraulic cylinder. After moving, press was performed for 30 seconds at pressure of 10 MPa. The mold was kept to the temperature of 100°C by a temperature controller. After unclamping, a molded product was demolded by moving the slide core to obtain a composite shaped product having an undercut portion. The undercut portion was cut out of the obtained shaped product to measure a fiber length and tensile modulus, and it was confirmed that the average fiber length was 20 mm (a fiber length ratio with respect to the impregnated precursor was 1.0) and there was no deterioration of tensile strength of the undercut portion.

Example 3

Two impregnated precursors obtained in Manufacturing example 3 were heated up to 230°C by using an infrared heating furnace and layered, and next, the impregnated precursors were conveyed into the mold illustrated in FIG. 1, and the slide core was moved by a hydraulic cylinder. After moving, press was performed for 40 seconds at pressure of 10 MPa. The mold was kept to the temperature of 100°C by a temperature controller. After unclamping, a molded product was demolded by moving the slide core to obtain a shaped product having an undercut portion. The undercut portion was cut out of the obtained shaped product to measure a fiber length and tensile modulus. It was confirmed that the average fiber length was 15 mm (a fiber length ratio with respect to the impregnated precursor was 1.0) and there was no deterioration of tensile strength of the undercut portion.

Example 4

The impregnated precursor obtained in Manufacturing example 4 was heated up to 270°C by using an infrared heating furnace, and next, the impregnated precursor was conveyed into the mold illustrated in FIG. 1, and the slide core was moved by a hydraulic cylinder. After moving, press was performed for 30 seconds at pressure of 10 MPa. The mold was kept to the temperature of 100°C by a temperature controller. After unclamping, a molded product was demolded by moving the slide core to obtain a composite shaped product having an undercut portion. The undercut portion was cut out of the obtained shaped product to measure a fiber length and tensile modulus, and it was confirmed that the average fiber length was 19.1 mm (a fiber length ratio with respect to the impregnated precursor was 0.95) and there was no deterioration of tensile strength of the undercut portion.

Example 5

The impregnated precursor obtained in Manufacturing example 5 was heated up to 290°C by using an infrared heating furnace, and next, the impregnated precursor was conveyed into the mold illustrated in FIG. 1, and the slide core was moved by a hydraulic cylinder. After moving, press was performed for 30 seconds at pressure of 10 MPa. The mold was kept to the temperature of 120°C by a temperature controller. After unclamping, a molded product was demolded by moving the slide core to obtain a shaped product having an undercut portion. The undercut portion was cut out of the obtained shaped product to measure a fiber length and tensile modulus. It was confirmed that the average fiber length was 2.0 mm (a fiber length ratio with respect to the impregnated precursor was 1.0) and there was no deterioration of tensile strength of the undercut portion.

Example 6

The impregnated precursor obtained in Manufacturing example 6 was heated up to 280°C by using an infrared heating furnace, and next, the impregnated precursor was conveyed into the mold illustrated in FIG. 1, and the slide core was moved by a hydraulic cylinder. After moving, press was performed for 30 seconds at pressure of 10 MPa. The mold was kept to the temperature of 130°C by a temperature controller. After unclamping, a molded product was demolded by moving the slide core to obtain a shaped product having an undercut portion. The undercut portion was cut out of the obtained shaped product to measure a fiber length and tensile modulus, and it was confirmed that the average fiber length was 19.5 mm (a fiber length ratio with respect to the impregnated precursor was 0.98) and there was no deterioration of tensile strength of the undercut portion.

Table 2

| Examples | Used precursor | Fiber length ratio [3] | Existence of deterioration of tensile strength |
|---|---|---|---|
| 1 | Manufacturing example 1 | 0.98 | No |
| 2 | Manufacturing example 2 | 1.00 | No |
| 3 | Manufacturing example 3 | 1.00 | No |

(continued)

| Examples | Used precursor | Fiber length ratio [3] | Existence of deterioration of tensile strength |
|---|---|---|---|
| 4 | Manufacturing example 4 | 0.95 | No |
| 5 | Manufacturing example 5 | 1.00 | No |
| 6 | Manufacturing example 6 | 0.98 | No |

Fiber length ratio [3]: Fiber length of impregnated precursor/ fiber length of undercut portion after molding

Industrial Applicability

The production method of the present invention may provide a composite shaped product to cope with complication or thin-walling of a product shape. Therefore, the composite shaped product obtained in the present invention may be appropriately used to, for example, structural components for vehicles, and electronic application housings.

**Claims**

1. A method of manufacturing a composite shaped product including an undercut portion, the method comprising:

   (i) heating and pressurizing a non-impregnated precursor including carbon fibers with an average fiber length in a range of 1 mm to 100 mm and a thermoplastic resin to prepare an impregnated precursor;
   (ii) heating the impregnated precursor at a temperature not less than a melting temperature of the thermoplastic resin;
   (iii) arranging the heated impregnated precursor within a mold having an undercut structure;
   (iv) clamping the mold after or while the undercut structure is operated and pressurizing the impregnated precursor; and
   (v) unclamping the mold and re-operating the undercut structure to take out the composite shaped product from the unclamped mold.

2. The method of claim 1,
   wherein a part of the carbon fibers include a carbon fiber bundle in the non-impregnated precursor.

3. The method of claim 2,
   wherein the non-impregnated precursor includes a sheet having carbon fiber bundles (A) including single carbon fibers of a critical number of single fiber or more, the critical number of single fiber being defined by Equation (1), and a ratio of the carbon fiber bundles (A) to a total amount of the carbon fibers is 20 Vol% or more and 99 Vol% or less:

$$\text{Critical number of single fiber} = 600/D \qquad (1)$$

wherein D is an average fiber diameter ($\mu$m) of the single carbon fibers.

4. The method of claim 3,
   wherein an average fiber number (N) of the carbon fiber bundles (A) satisfies Equation (2):

$$0.7 \times 10^4/D^2 < N < 1 \times 10^5/D^2 \qquad (2).$$

5. The method of claim 1,
   wherein the non-impregnated precursor includes a sheet in which the carbon fibers are substantially randomly oriented in in-plane directions.

6. The method of claim 1,
   wherein a content ratio of the thermoplastic resin to the carbon fibers in the non-impregnated precursor ranges from 50 to 1,000 parts by volume to 100 parts by volume of the carbon fibers.

**7.** The method of claim 1,
wherein a part of the carbon fibers include a carbon fiber bundle in the impregnated precursor.

**8.** The method of claim 1,
wherein the impregnated precursor includes a sheet having carbon fiber bundles (A) including single carbon fibers of a critical number of single fiber or more, the critical fiber number being defined by Equation (1), and a ratio of the carbon fiber bundles (A) to a total amount of the carbon fibers is 20 Vol% or more and 99 Vol% or less:

$$\text{Critical number of single fiber} = 600/D \qquad (1)$$

wherein D is an average fiber diameter ($\mu$m) of the single carbon fibers.

**9.** The method of claim 1,
wherein the impregnated precursor includes a sheet in which the carbon fibers are substantially randomly oriented in in-plane directions.

**10.** The method of claim 1,
wherein the undercut structure is operated independently from an operation of a pressurizer.

**11.** The method of claim 1,
wherein the undercut structure is at least one kind selected from the group consisting of a slide core, an inclined core, a cam, and a setting core.

**12.** A composite shaped product having an undercut portion, manufactured by the method of claim 1.

**13.** The composite shaped product having the undercut portion of claim 12,
wherein a ratio (E$\delta$) obtained by dividing a larger value by a smaller value of tensile modulus in an arbitrary in-plane direction and a direction perpendicular to the arbitrary in-plane direction ranges from 1.0 to 1.4.

**14.** The composite shaped product having the undercut portion of claim 12,
wherein a ratio of a fiber length of the carbon fibers in the composite shaped product ranges from 0.7 to 1.0 with respect to a fiber length of the carbon fibers in the impregnated precursor, set to be 1.0.

**15.** Use of an impregnated precursor obtained by heating and pressurizing a non-impregnated precursor including carbon fibers with an average fiber length in a range of 1 mm to 100 mm and a thermoplastic resin, for manufacturing a composite shaped product having an undercut portion by using a mold having an undercut structure and pressurizing the mold.

# FIG.1

WHEN CYLINDER LOWERED

WHEN CYLINDER RAISED

EP 2 752 285 A1

# FIG.2

WHEN CYLINDER RAISED

WHEN CYLINDER LOWERED

# FIG.3

WHEN CYLINDER RAISED                    WHEN CYLINDER LOWERED

EP 2 752 285 A1

## INTERNATIONAL SEARCH REPORT

| | International application No. |
|---|---|
| | PCT/JP2012/071746 |

**A. CLASSIFICATION OF SUBJECT MATTER**

*B29C43/42*(2006.01)i, *B29B11/16*(2006.01)i, *B29C33/44*(2006.01)i, *C08J5/04*(2006.01)i, *B29K101/12*(2006.01)n, *B29K105/08*(2006.01)n

According to International Patent Classification (IPC) or to both national classification and IPC

**B. FIELDS SEARCHED**

Minimum documentation searched (classification system followed by classification symbols)
B29C43/42, B29B11/16, B29C33/44, C08J5/04, B29K101/12, B29K105/08

Documentation searched other than minimum documentation to the extent that such documents are included in the fields searched
Jitsuyo Shinan Koho          1922–1996     Jitsuyo Shinan Toroku Koho     1996–2012
Kokai Jitsuyo Shinan Koho    1971–2012     Toroku Jitsuyo Shinan Koho     1994–2012

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2-225533 A  (Kuraray Co., Ltd.), 07 September 1990 (07.09.1990), entire text; particularly, claims; page 3, upper right column to page 7, upper left column & US 5403654 A          & EP 370512 A2 & DE 68921428 C          & DE 68921428 D | 1-15 |
| Y | JP 56-037138 A  (Kojima Press Industry Co., Ltd.), 10 April 1981 (10.04.1981), claims; page 4, upper left column to upper right column; fig. 1 to 8 (Family: none) | 1-15 |

☒  Further documents are listed in the continuation of Box C.          ☐  See patent family annex.

| | |
|---|---|
| *     Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 27 November, 2012 (27.11.12) | 04 December, 2012 (04.12.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2012/071746 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 10-193350 A  (Kawasaki Steel Corp.), 28 July 1998 (28.07.1998), entire text; particularly, claims; paragraphs [0030] to [0046], [0069] to [0074]; fig. 4 (Family: none) | 3,4,8 |
| A | JP 4-312818 A  (Sekisui Chemical Co., Ltd.), 04 November 1992 (04.11.1992), entire text (Family: none) | 1-15 |
| A | JP 56-089536 A  (Kabushiki Kaisha Minami Kanagata Kosakusho), 20 July 1981 (20.07.1981), entire text (Family: none) | 1-15 |
| A | Microfilm of the specification and drawings annexed to the request of Japanese Utility Model Application No. 190593/1984(Laid-open No. 105124/1986) (Toyoda Gosei Co., Ltd.), 04 July 1986 (04.07.1986), entire text (Family: none) | 1-15 |

Form PCT/ISA/210 (continuation of second sheet) (July 2009)

**EP 2 752 285 A1**

**Patent documents cited in the description**

- JP H6126783 B
- JP 2010264682 A
- JP 2009028939 A

**Non-patent literature cited in the description**

- **FUKUSHIMA YUICHI.** understandable design of plastic injection molding mold. Nikkan Kogyo Shimbun, Ltd, 18 November 2002